Europäisches Patentamt

European Patent Office

Office européen des brevets

(19)

(11) Numéro de publication : **0 079 566**
**B1**

(12) # FASCICULE DE BREVET EUROPÉEN

(45) Date de publication du fascicule du brevet :
20.02.85

(21) Numéro de dépôt : 82110315.7

(22) Date de dépôt : 09.11.82

(51) Int. Cl.⁴ : **H 04 Q   5/24**

(54) **Quadripôle limiteur de parasites pour systèmes de transmission téléphonique de type 1 + 1.**

(30) Priorité : 13.11.81 FR 8121314

(43) Date de publication de la demande :
25.05.83 Bulletin 83/21

(45) Mention de la délivrance du brevet :
20.02.85 Bulletin 85/08

(84) Etats contractants désignés :
**BE DE FR GB IT LU NL**

(56) Documents cités :
FR-A- 1 522 794
REVUE GENERALE DE L'ELECTRICITE, vol. 79, no. 9,
october 1970, pages 731-740, Paris (FR); J. HURAULT:
"Nouveau poste d'abonné à courants porteurs transistorisé P.P.T."

(73) Titulaire : **COMPAGNIE INDUSTRIELLE DES TELE-**
**COMMUNICATIONS CIT-ALCATEL S.A. dite:**
**12, rue de la Baume**
**F-75008 Paris (FR)**

(72) Inventeur : **Le Grand, Yves-Marie**
**1, rue Paolo Picasso**
**F-78190 Trappes (FR)**

(74) Mandataire : **Weinmiller, Jürgen et al**
**Zeppelinstrasse 63**
**D-8000 München 80 (DE)**

EP 0 079 566 B1

## Description

La présente invention concerne les transmissions téléphoniques et plus précisément les systèmes de transmission à courants porteurs pour abonnés de type 1 + 1.

Ces systèmes permettant de relier deux terminaux d'abonnés à un central téléphonique par une liaison bifilaire commune. L'un des terminaux est classiquement relié par une voie téléphonique dite phonique transmise en bande de base sur la liaison bifilaire commune. Il est téléalimenté par l'intermédiaire de la liaison bifilaire commune à partir d'une batterie d'alimentation disposée au central. L'autre terminal est relié par courants porteurs. Les deux sens de sa voie dite supraphonique sont transmis en bandes transposées sur la liaison bifilaire commune. Il peut également être téléalimenté par l'intermédiaire de la liaison bifilaire commune à partir de la batterie d'alimentation disposée au central. La superposition des voies phonique et supraphonique sur la liaison bifilaire commune et leur séparation aux extrémités de cette dernière se font à l'aide de circuits d'aiguillage qui comportent chacun un filtre passe-bas reliant la liaison · bifilaire commune à une ligne deux fils sur laquelle est isolée la voie phonique et des filtres passe-bande qui relient la liaison bifilaire commune à une ligne quatre fils sur laquelle sont isolés les deux sens de la voie supraphonique.

Des parasites relativement importants apparaissent sur la voie supraphonique lorsque la voie phonique est en numérotation ou en signalisation et empêchent la voie supraphonique de fonctionner convenablement en transmission de données.

La présente invention a pour but de limiter les parasites engendrés sur la voie supraphonique par la transmission de signaux de numérotation, de signalisation ou d'appel de la voie phonique sur la · liaison bifilaire commune, cela afin de permettre l'utilisation de la voie supraphonique pour des transmissions de données.

Elle a également pour but d'obtenir cette limitation à un faible coût et d'une manière simple et efficace.

Elle a pour objet un quadripôle limiteur de parasites comportant deux circuits limiteurs de courant placés, côté central, sur chacun des deux fils de la ligne à deux fils de la voie phonique connectés à la liaison bifilaire commune par l'intermédiaire du filtre passe-bas d'un circuit d'aiguillage.

De manière préférentielle, le quadripôle comporte un filtre passe-bas qui est disposé entre les limiteurs de courant et le filtre passe-bas du circuit d'aiguillage et qui possède une branche capacitive placée en shunt entre les deux fils de la ligne deux fils avec un point milieu connecté à la masse de la batterie d'alimentation du central qui téléalimente le terminal d'abonné relié par la voie phonique.

Selon un mode particulier de réalisation les deux circuits limiteurs de courant sont des limiteurs de courant continu identiques shuntés chacun par une diode de contournement connectée en inverse.

D'autres caractéristiques et avantages de l'invention ressortiront des revendications jointes et de la description ci-après d'un mode de réalisation donné à titre d'exemple. Cette description sera faite en regard du dessin dans lequel :

la figure 1 représente de manière schématique une transmission téléphonique de type 1 + 1,

la figure 2 détaille un filtre d'aiguillage utilisé dans une transmission téléphonique de type 1 + 1 et la figure 3 représente le schéma de la structure d'un quadripôle de limitation de parasites selon l'invention.

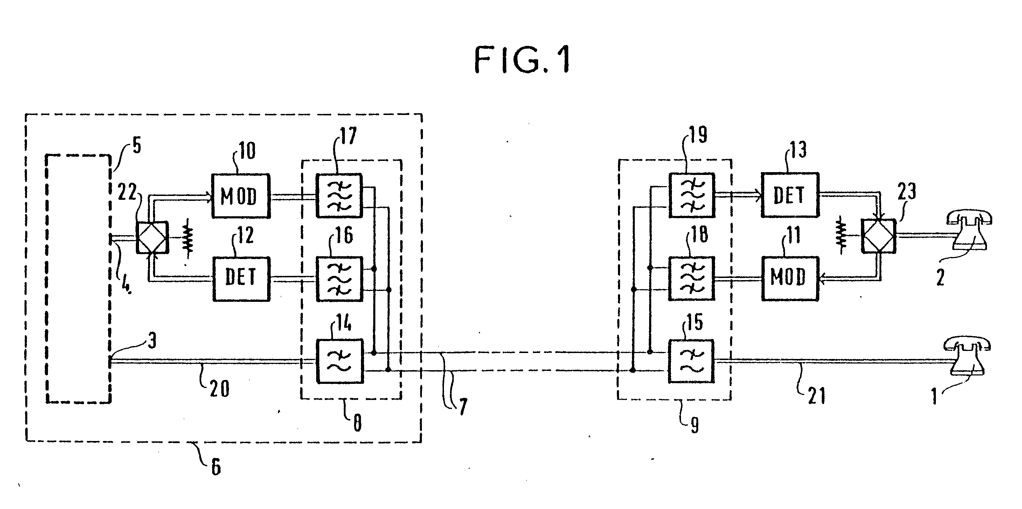

On distingue sur la figure 1 deux terminaux d'abonné 1, 2 reliés à des accès bidirectionnels distincts 3, 4 d'un joncteur 5 d'un central de commutation téléphonique 6 par l'intermédiaire d'une liaison bifilaire commune 7 grâce à un système de transmission à courants porteurs du type 1 + 1 qui réalise un multiplexage en fréquence des voies téléphoniques des terminaux d'abonné 1 et 2.

Les signaux de parole, de numérotation, de signalisation et d'appel échangés entre l'accès bidirectionnel 3 du joncteur du central et le terminal d'abonné 1 sont transmis tels quels par la liaison bifilaire commune 7 qui se comporte vis-à-vis du terminal d'abonné 1 comme une ligne deux fils ordinaires. Les signaux échangés entre l'accès bidirectionnel 4 du joncteur du central et le terminal d'abonné 2 subissent des transpositions dans une bande de fréquences centrée autour de 24 KHz pour un sens et autour de 48 KHz pour l'autre sens avant d'être acheminés par la liaison bifilaire commune 7. Les signaux de numérotation, de signalisation et d'appel échangés entre le central et le terminal d'abonné 2 sont acheminés sur la liaison bifilaire commune par l'intermédiaire de porteuses à 24 KHz et 48 KHz.

La voie téléphonique du terminal d'abonné 1 qui est transmise dans la bande de base 300-3 400 Hz est appelée pour plus de commodité voie phonique tandis que la voie téléphonique du terminal d'abonné 2 est appelée voie supraphonique.

Le système de transmission téléphonique du type 1 + 1 comporte aux extrémités de la liaison bifiliaire commune 7 des circuits d'aiguillage 8 et 9 qui assurent la superposition des voies phonique et supraphonique dans la liaison bifilaire commune 7 et leur séparation à l'extérieur de cette dernière, des modulateurs 10, 11 et des détecteurs 12, 13 qui assurent les modulations et détections des deux sens de la voie supraphonique ainsi que des dispositifs annexes qui traitent les signaux de numérotation, de signalisation et d'appel échangés entre le central et le terminal d'abonné 2 et qui ne sont pas représentés car ils sont bien connus et sortent du domaine de l'invention.

Chaque circuit d'aiguillage 8 respectivement 9 est muni d'un filtre passe-bas 14 respectivement 15 permettant l'introduction de la voie phonique dans la liaison bifilaire commune et son extraction, et de deux filtres passe-bande 16, 17 respectivement 18, 19 qui sont centrés l'un sur la fréquence de 24 KHz et l'autre sur la fréquence de 48 KHz et qui permettent l'introduction des deux sens de la voie supraphonique dans la liaison bifilaire commune et leurs extractions.

La voie phonique est acheminée continûment sur deux fils. Elle emprunte une première ligne à deux fils 20 reliant l'accès 3 du joncteur 5 au filtre passe-bas 14 du circuit d'aiguillage 8, puis la liaison bifilaire commune 7 reliant les deux circuits d'aiguillage 8 et 9 et enfin une deuxième ligne à deux fils 21 reliant le filtre passe-bas 15 du circuit d'aiguillage 9 au terminal d'abonné 1. Cet acheminement continu sur deux fils permet de téléalimenter à tension constante le terminal d'abonné 1 à partir d'une batterie d'accumulateurs disposée au central 6 comme cela est de règle pour les terminaux d'abonné reliés au central par des lignes deux fils individuelles.

La voie supraphonique a ses deux sens acheminés séparément soit sur des lignes quatre fils lorsqu'ils sont en bande de base, soit dans des bandes de fréquences différentes lorsqu'ils sont transposés.

Les signaux en provenance de l'accès bidirectionnel 4 du joncteur 5 et à destination du terminal d'abonné 2 sont tout d'abord séparés des signaux de sens inverse par un circuit hybride 22 puis appliqués à la liaison bifilaire commune 7 par l'intermédiaire du modulateur 10 qui les transpose dans une bande de fréquence centrée sur 48 KHz et du filtre passe-bande 17 qui est centré sur cette dernière fréquence et qui élimine les résidus de modulation. Ils sont ensuite isolés à l'autre extrémité de la liaison bifilaire commune 7 par le filtre passe-bande 19 centré sur la fréquence de 48 KHz, replacés dans la bande de base par le détecteur 13 et mélangés avec les signaux de sens inverse par un circuit hybride 23 avant d'être appliqués par une ligne deux fils au terminal d'abonné 2.

Les signaux en provenance du terminal d'abonné 2 et à destination de l'accès bidirectionnel 4 du joncteur 5 sont tout d'abord séparés des signaux de sens inverse par le circuit hybride 23 puis appliqués à la liaison bifilaire commune 7 par l'intermédiaire du modulateur 11 qui les transpose dans une bande de fréquence centrée sur 24 KHz et du filtre passe-bande 18 qui est centré sur cette dernière fréquence et qui élimine les résidus de modulation. Ils sont isolés à l'autre extrémité de la liaison bifilaire commune 7 par le filtre passe-bande 16 centré sur la fréquence de 24 KHz, replacés dans la bande de base par le détecteur 12 et mélangés avec les signaux de sens inverse par le circuit hybride 22 avant d'être appliqués à l'accès bidirectionnel 4 du joncteur 5.

Les équipements du système de transmission de type 1 + 1 montés à l'extrémité de la liaison bifilaire commune 7, côté central 6, sont regroupés et alimentés par la batterie d'accumulateurs du central. Ceux montés à l'extrémité de la liaison bifilaire commune 7, côté terminaux d'abonné 1, 2, ne sont pas répartis comme indiqué sur la figure 1, le filtre passe-bas 15 étant placé à l'extrémité de la liaison bifilaire commune 7 et le reste étant regroupé à proximité du terminal d'abonné 2 et alimenté avec ce dernier le plus souvent par une alimentation locale parfois par une téléalimentation à faible courant à partir de la batterie d'accumulateurs du central, cette téléalimentation empruntant la liaison bifilaire commune 7.

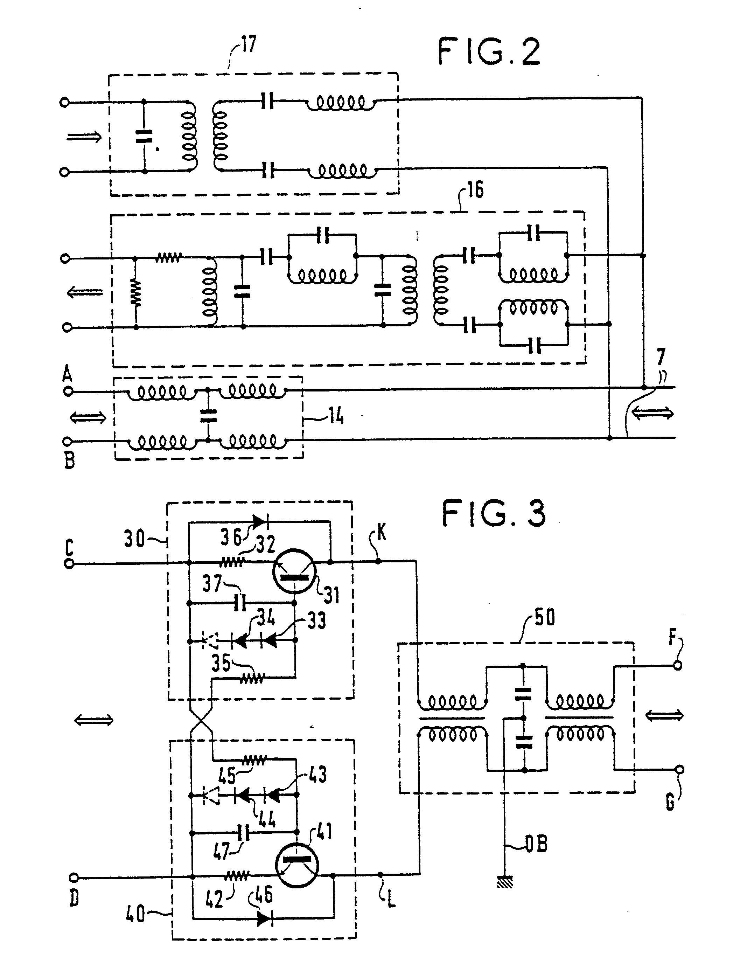

La figure 2 détaille la constitution des filtres 14, 16, 17 du circuit d'aiguillage 8. Avec une telle structure, les signaux de signalisation, de numérotation et d'appel de la voie phonique qui se font par inversion de polarité de la batterie d'accumulateur et interruption de la boucle de téléalimentation du terminal d'abonné 1 produisent des oscillations parasites très intenses dans les filtres passe-bande aiguillant la voie supraphonique, qui perturbent totalement des équipements fonctionnant à bas niveau tels que des modems de transmission de données.

Pour étouffer ces perturbations on intercale dans la voie phonique devant les bornes A, B du filtre passe-bas 14, à l'extrémité de la ligne deux fils 20 provenant de l'accès 3 du joncteur 5, un quadripôle limiteur de parasites dont la structure est représentée à la figure 3. Ce quadripôle a deux accès deux fils, un accès C, D destiné à être raccordé à la ligne bifilaire 20 (figure 1) et un accès F, G destiné à être raccordé aux bornes A, B (figure 2) du filtre passe-bas 14. Il comporte essentiellement deux limiteurs de courant 30, 40 placés devant chacune des bornes du filtre passe-bas 14 et un filtre passe-bas supplémentaire 50 intercalé entre les limiteurs de courant 30, 40 et les bornes A, B du filtre passe-bas 14.

Les deux limiteurs de courant 30, 40 agissent pendant la phase de signalisation où ils remplacent la source de téléalimentation à tension constante constituée par la batterie d'accumulateurs du central, par une source de téléalimentation à courant constant qui limite les pointes de courant pertubatrices. Ils sont identiques et forment un premier circuit ayant deux accès deux fils, l'un commun avec l'accès C, D du quadripôle l'autre K, L auquel se raccorde le filtre passe-bas 50. Ils comportent chacun un transistor ballast 31 respectivement 41 de type NPN qui est monté en générateur de courant. Ce transistor ballast 31 respectivement 41 a une résistance d'émetteur 32 respectivement 42 de faible valeur et un circuit de polarisation base formé d'une chaîne de diodes 33, 34 respectivement 43, 44 disposée dans le même sens que sa jonction base-émetteur en parallèle sur le montage série constituée par cette dernière jonction et la résistance d'émetteur, et d'une résistance de polarisation 35 respectivement 45 de la chaîne de diodes connectée par une extrémité à sa base. Une diode de contournement 36 respectivement 46 est connectée en shunt sur le montage série formé par la résistance d'émetteur et la jonction émetteur-collecteur du transistor ballast, en sens opposé à celui de cette dernière jonction et protège le transistor ballast contre les tensions inverses. Un condensateur de découplage 37 respectivement 47 connecté en parallèle sur la chaîne de diodes découple en alternatif la base du transistor ballast. Le montage série formé de la résistance d'émetteur 32 respectivement 42 et de la jonction émetteur-collecteur du transistor ballast 31 respectivement 41 relie les bornes d'accès C, K respectivement D, L tandis que l'extrémité libre de la résistance de polarisation 35 respectivement 45 est connectée à la borne d'accès D respectivement C.

Les deux fils de l'accès 3 du joncteur 5 du central réservé au terminal d'abonné 1 relié par la voie phonique sont normalement mis l'un à la masse OB de la batterie d'accumulateurs du central 6 et l'autre au potentiel − 48 volts de cette batterie. Cette polarité est inversée dans certains cas, par exemple pour indiquer si une communication doit être taxée ou non.

Lorsque la masse OB est appliquée à la borne C et le − 48 volts à la borne D, le limiteur de courant 30 est bloqué et contourné par sa diode de contournement 36 tandis que le limiteur de courant 40 impose sa loi et a sa diode de contournement 46 bloquée. En effet le transistor ballast 31 du limiteur de courant 30 est bloqué par une polarisation inverse de sa jonction base-émetteur due à l'application du − 48 volts à l'extrémité de sa résistance de polarisation 35 et du 0 volt à l'extrémité de sa résistance d'émetteur 32. La diode de contournement 36 est passante car polarisée en direct. Le transistor ballast 41 du limiteur de courant 40 est passant car sa jonction base-émetteur est polarisée en direct par l'application du − 48 volts à l'extrémité de sa résistance d'émetteur 42 et du 0 volt à l'extrémité de sa résistance de polarisation 45. La diode de contournement 46 est bloquée car polarisée en inverse.

Réciproquement, lorsque la masse OB est appliquée à la borne D et le − 48 volts à la borne C le limiteur de courant 30 impose sa loi tandis que le limiteur de courant 40 est bloqué et contourné par la diode de contournement 46.

Le transistor ballast du limiteur de courant qui impose sa loi a son potentiel de base fixé par rapport au − 48 volts par la chaîne de diodes de son circuit de polarisation base. La limitation de courant est simplement obtenue par le choix convenable du courant de saturation du transistor ballast. Ce courant de saturation est ajusté par un dimensionnement approprié de la résistance de polarisation et de la chaîne de diodes. La résistance d'émetteur améliore la qualité de la limitation de courant par une légère contre-réaction d'intensité.

Le courant de saturation des transistors ballast est choisi de l'ordre de 30 mA qui est la valeur nécessaire pour la téléalimentation du terminal d'abonné 1 en régime établi. Au-delà d'un tel courant, le transistor ballast quitte sa plage de saturation pour aller vers un régime linéaire où il se comporte comme un générateur de courant. On choisit une résistance d'émetteur de l'ordre d'une dizaine d'ohms pour obtenir une valeur de limitation du courant de l'ordre de 50 mA.

Pour réduire le courant transversal parcourant la résistance de polarisation du limiteur de courant qui n'est pas bloqué il est avantageux d'utiliser comme ballast un transistor de type Darlington. Dans ce cas il est nécessaire de rajouter une diode à la chaîne de diodes. Cette diode supplémentaire est représentée en pointillé sur la figure 3.

En régime établi, c'est-à-dire en l'absence d'inversion des bornes de la batterie d'accumulateurs du central sur l'accès 3 du joncteur 5, le transistor ballast du limiteur de courant qui impose sa loi est saturé de sorte que ce dernier limiteur n'introduit qu'une très faible chute de tension dans le circuit de téléalimentation et ne perturbe pas le régime normal de téléalimentation à tension constante. Par contre, dans les instants qui suivent une inversion des bornes de la batterie d'accumulateurs du central sur l'accès 3 du joncteur 5, le transistor ballast du limiteur de courant qui impose sa loi n'est pas saturé, il supporte la majeure partie de la variation de tension de 48 volts et limite le courant de téléalimentation à une valeur de 50 mA réalisant ainsi un générateur de courant sensiblement constant.

Le filtre passe-bas 50 est un filtre en T à inductance série et capacité shunt qui a été symétrisé par rapport aux deux conducteurs en répartissant le bobinage des inductances par moitié sur chaque fils et dont la capacité shunt a été pourvue d'un point milieu connecté à la masse OB qui est celle de la batterie d'accumulateurs du central servant à la téléalimentation du terminal d'abonné 1. Il présente un accès deux fils commun avec l'accès K, L des limiteurs de courant 30, 40 et un accès deux fils commun avec l'accès deux fils F, G du quadripôle limiteur de parasite qui est destiné à être raccordé aux bornes A, B du filtre passe-bas 14.

La connexion du point milieu de la branche capacitive du filtre 50 à la masse OB de la batterie d'accumulateurs du central qui téléalimente les terminaux d'abonné apporte une amélioration spectaculaire de la réduction des perturbations causées à la voie supraphonique par les signaux de signalisation, numérotation et appel de la voie phonique. Cela semble dû au fait que, grâce à elle, l'entrée du filtre 50 en combinaison avec les limiteurs de courant 30, 40 se comporte aux fréquences de la voie supraphonique comme un filtre RC.

**Revendications**

1. Quadripôle limiteur de parasites pour un système de transmission de type 1 + 1 reliant par une liaison bifilaire commune (7) deux terminaux (1, 2) d'abonné à un central téléphonique (6) pourvu d'une batterie d'accumulateurs, l'un (1) des terminaux étant relié par une voie dite phonique transmise en bande de base sur la liaison bifilaire commune (7) et téléalimenté à partir de la batterie d'accumulateurs du central (6) par l'intermédiaire de cette dernière liaison, l'autre terminal (2) étant relié par une voie dite supraphonique transmise en bandes transposées sur la liaison bifilaire commune (7), les voies phonique et supraphonique étant superposées sur la liaison bifilaire commune (7) et séparées aux extrémités de cette dernière par des filtres d'aiguillage (8, 9) qui comportent chacun un filtre passe-bas (14, 15) reliant la liaison bifilaire commune à une ligne deux fils (20, 21) sur laquelle est isolée la voie phonique, ledit quadripôle étant caractérisé en ce qu'il comporte deux circuits limiteurs de courant (30, 40) placés côté central (6) sur chacun des deux fils de la ligne deux fils (20) de la voie phonique connectés à la liaison bifilaire commune (7) par l'intermédiaire du filtre passe-bas (14) d'un filtre d'aiguillage (8).

2. Quadripôle selon la revendication 1, caractérisé par le fait que chaque circuit limiteur de courant (30,40) est un limiteur de courant continu shunté par une diode de contournement (36, 46).

3. Quadripôle selon la revendication 1, caractérisé en ce que les deux limiteurs de courant (30, 40) sont identiques.

4. Quadripôle selon la revendication 1, caractérisé en ce qu'il comporte en outre un filtre passe-bas (50) qui est intercalé entre les deux limiteurs de courant (30, 40) et le filtre passe-bas (14) du circuit d'aiguillage (8) et qui comporte une branche capacitive qui est disposé en shunt entre les deux fils de la ligne deux fils et qui possède un point milieu connecté à la masse (OB) de la partie d'accumulateurs du central (6) qui téléalimente l'un au moins (1) des terminaux d'abonné.

**Claims**

1. A two-port network for limiting disturb signals in a transmission system of type 1 + 1 connecting through a common two-wire link (7) two subscriber terminals (1, 2) with a telephone exchange (6) provided with an accumulator battery, one of the subscriber terminals (1) being connected by a channel called phonic channel, which is transmitted in the base band on the common two-wire link (7) and which is remotely power-supplied from the accumulator battery of the exchange (6) via this latter link, whereas the other subscriber terminal (2) is connected through a channel called supraphonic channel which is transmitted in transposed frequency bands on the common two-wire link (7), the phonic and supraphonic channels being superposed on the common two-wire link (7) and being separated at the end of the latter by separation filters (8, 9), each comprising a low-pass filter (14, 15) for connecting the common two-wire link to a two-wire line (20, 21) on which the phonic channel is insulated, characterized in that it comprises two current limiter circuits (30, 40), each placed in series in a respective on of the two wires of the two-wire line (20) of the phonic channel at the end of the exchange and connected to the common two-wire link (7) via the low-pass filter (14) of a separation filter (8).

2. A two-port network according to claim 1, characterized in that each current limiter circuit (30, 40) is a DC current limiter which is shunted by a by-pass diode (36, 46).

3. A two-port network according to claim 1, characterized in that the two current limiters (30, 40) are identical.

4. A two-port network according to claim 1, characterized in that it further comprises a low-pass filter (50) which is inserted between the two current limiters (30, 40) and the low-pass filter (14) of the separation circuit (8) and which comprises a capacitor branch disposed in a shunt across the two wires of the two-wire line and which possesses a mid point connected to the ground (OB) of the accumulator battery of the exchange (6) which remotely supplies power to at least one of the subscriber terminals (1).

**Ansprüche**

1. Vierpol zur Begrenzung von Störungen für ein Übertragungssystem vom Typ 1 + 1, mit dem über eine gemeinsame Zweidrahtleitung (7) zwei Teilnehmer-Endgeräte (1, 2) an eine mit einer Akkumulatorbatterie versehene Fernsprechzentrale (6) angeschlossen sind, wobei das eine Endgerät (1) über einen phonischen Kanal angeschlossen ist, der im Basisband auf der gemeinsamen Zweidrahtleitung (7) übertragen wird, und von der Akkumulatorbatterie der Zentrale (6) über diese Leitung mit Strom versorgt wird, während das andere Endgerät (2) über einen supraphonischen Kanal angeschlossen ist, der in umgesetzten Frequenzbändern auf der gemeinsamen Zweidrahtleitung (7) übertragen wird, wobei der phonische und der supraphonische Kanal einander auf der gemeinsamen Zweidrahtleitung (7) überlagert sind und an den Enden dieser Leitung durch Abzweigfilter (8, 9) voneinander getrennt werden, die je ein Tiefpaßfilter (14, 15) enthalten, wobei dieses Filter die gemeinsame Zweidrahtleitung an ein Leiterpaar (20, 21) anschließt, auf dem der phonische Kanal isoliert ist, dadurch gekennzeichnet, daß der Vierpol zwei Strombegrenzerschaltkreise (30, 40) aufweist, die auf der Seite der Zentrale (6) auf jedem der beiden Leiter des Leiterpaars (20) des phonischen Kanals angeordnet sing und an die gemeinsame Zweidrahtleitung (7) über das Tiefpaßfilter (14) eines Abzweigfilters (8) angeschlossen sind.

2. Vierpol nach Anspruch 1, dadurch gekennzeichnet, daß jeder Strombegrenzerschaltkreis (30, 40) einen Gleichstrombegrenzer enthält, der von einer Umleitungsdiode (36, 46) überbrückt ist.

3. Vierpol nach Anspruch 1, dadurch gekennzeichnet, daß die beiden Strombegrenzer (30, 40) gleich aufgebaut sind.

4. Vierpol nach Anspruch 1, dadurch gekennzeichnet, daß er außerdem ein Tiefpaßfilter (50) enthält, das zwischen die beiden Strombegrenzer (30, 40) und das Tiefpafilter (14) des Abzweigschaltkreises (8) eingefügt ist und einen kapazitiven Zweig enthält, der in Ableitung zwischen den beiden Drähten des Leiterpaars liegt und einen mit der masse (OB) der mindestens eines der Teilnehmer-Endgeräte (1) fernversorgenden Akkumulatorbatterie der Zentrale (6) verbundenen Mittelabgriff besitzt.

# FIG.1

0 079 566

FIG.2

FIG.3

2